# FASCICULE DE BREVET EUROPEEN

(11) **EP 1 645 773 B1**
(45) Date de publication et mention de la délivrance du brevet: **12.01.2011**
(21) Numéro de dépôt: 05292104.6
(22) Date de dépôt: 10.10.2005
(51) Int. Cl.: F16F 13/14

(54) **Dispositif antivibratoire hydraulique pour véhicule et procédé de fabrication d'un tel dispositif**
Hydraulisches schwingungsdämpfendes Lager für ein Kraftfahrzeug und Herstellungsverfahren einer solchen Vorrichtung
Hydraulic antivibration device for vehicles and process for manufacturing such a device

(30) Priorité: 11.10.2004 FR 0410705
(43) Date de publication de la demande: 12.04.2006
(73) Titulaire: HUTCHINSON, 75008 Paris (FR)
(72) Inventeur: Gautier, Pierre, 18000 Bourges (FR); Bouhier, Bernard, 41140 Noyers Sur Cher (FR); Carobolante, Pascal, 18100 Saint Hilaire de Court (FR)
(74) Mandataire: Burbaud, Eric

(56) Documents cités:
- EP-A- 1 179 688
- FR-A- 753 892
- FR-A- 2 659 713
- US-A- 5 123 634
- PATENT ABSTRACTS OF JAPAN vol. 1999, no. 14, 22 décembre 1999 (1999-12-22) & JP 11 257415 A (MARUGO RUBBER IND CO LTD), 21 septembre 1999 (1999-09-21)

## Description

La présente invention est relative aux dispositifs antivibratoires.

Plus particulièrement, l'invention concerne un dispositif antivibratoire hydraulique comprenant, une armature interne et une armature externe co-axiales selon un axe longitudinal Z, un corps en élastomère, disposé entre les armatures internes et externes et reliant ces dernières, ce corps en élastomère étant solidarisé à l'armature interne et coopérant avec l'armature externe pour former un ensemble étanche, le corps en élastomère comportant au moins deux jeux de deux chambres hydrauliques, les chambres d'un même jeu communiquant entre elles par l'intermédiaire d'un conduit, dans lequel circule un fluide, au moins un des jeux étant prévu pour l'amortissement de vibrations selon une direction choisie parmi une direction radiale et une direction axiale.

Le document FR-2 659 712-A1 décrit un exemple d'un manchon antivibratoire hydraulique de ce type, comportant deux armatures internes rigides. Des conduits sont formés par des gorges réalisées dans l'épaisseur d'une première armature interne. Une deuxième armature interne est emmanchée sur la première pour fermer l'ouverture longitudinale de chaque gorge.

Le document US-5 123 634 décrit un dispositif du type décrit ci-dessus dans lequel les chambres sont reliées par un conduit délimité par l'armature extérieure et une armature intermédiaire usinée.

Le document JP-11 257 415 décrit un dispositif antivibratoire hydraulique dans lequel le corps en élastomère comporte des évidements 36 dirigés verticalement vers l'extérieur du manchon.

La présente invention a notamment pour but de simplifier la fabrication de ce type de manchon.

A cet effet, selon l'invention, on prévoit un dispositif selon la revendication 1.

Grâce à ces dispositions, il n'est plus nécessaire de prévoir une armature interne pour y former les conduits. Dans le mode de réalisation du manchon selon l'invention tel que défini ci-dessus, les conduits sont réalisés au voisinage de l'armature externe qui obture des gorges formées dans le corps en élastomère. Au lieu d'usiner les gorges sur une pièce métallique constitutive d'une armature interne pour chaque manchon, celles-ci sont formées une fois pour toutes, sur le moule.

Dans divers modes de réalisation du dispositif selon l'invention, on peut éventuellement avoir recours en outre à l'une et/ou à l'autre des dispositions suivantes :
- l'armature à fenêtre présente des fenêtres délimitant une section des chambres ;
- le dispositif comporte :
   - au moins un premier jeu de deux chambres, reliées entre elles par un premier conduit s'étendant essentiellement parallèlement à l'axe longitudinal Z, pour l'amortissement de vibrations selon la direction axiale,
   - au moins un deuxième jeu de deux chambres, reliées entre elles par un deuxième conduit s'étendant essentiellement dans un plan perpendiculaire à l'axe longitudinal Z, pour l'amortissement de vibrations selon une direction radiale, et
   - deux éléments de flasques distincts, les premier et deuxième conduits passant chacun entre un élément de flasque distinct et l'armature externe ;
   dans le présent document, un élément de flasque correspond à une portion de surface de l'armature à fenêtre. Ces éléments de flasques sont par exemple à 180 degrés l'un de l'autre par rapport à l'axe longitudinal
- les premier et deuxième conduits sont diamétralement opposés l'un de l'autre ;
- des bourrelets en élastomère longent au moins une partie de chaque conduit, pour renforcer les propriétés d'étanchéité des conduits ;
- chaque chambre d'un premier jeu s'étend longitudinalement parallèlement à un plan médian et perpendiculaire à l'axe longitudinal Z, et est symétrique de l'autre chambre par rapport à ce plan médian et chaque chambre d'un deuxième jeu s'étend longitudinalement essentiellement dans le plan sensiblement médian, et est symétrique de l'autre par rapport à l'axe Z ;
- le dispositif comporte deux jeux de chambres prévus pour l'amortissement selon une direction axiale, ces deux jeux étant diamétralement opposés et disposés au voisinage des extrémités longitudinales du dispositif, le conduit reliant les deux chambres de chaque jeu s'étendant essentiellement selon l'axe longitudinal ;
- l'armature comporte au moins deux éléments de flasques semi-cylindriques métalliques et assemblés par agrafage ;
- l'armature à fenêtre comporte une ossature métallique sur laquelle sont rapportés des éléments de flasque en matière plastique ;
- l'armature à fenêtre comporte deux éléments de flasques métalliques cylindriques assemblés par soudage ;
- l'armature à fenêtre présente au moins une zone d'appui en forme de U, dont les branches sont adjacentes à des chambres ;
- la zone d'appui est formée par une partie en saillie et dirigée vers l'intérieur des éléments de flasque en matière plastique ;
- l'armature est constituée entièrement en matière plastique .

Par ailleurs, l'invention a également pour objet un procédé de fabrication du dispositif défini ci-dessus caractérisé par le fait que l'on place une armature à fenêtre dans un moule, avec l'armature interne, et que le moule est formé d'au moins deux parties, l'une au moins de ces parties comportant au moins un doigt et le moule étant adapté pour former, lorsqu'il est fermé, au moins deux empreintes de chambre et au moins un conduit reliant deux chambres, ce conduit ayant au moins une portion destinée à être située entre l'armature à fenêtre et l'armature externe.

Ce procédé comporte une opération de démoulage au cours de laquelle les deux parties du moule sont écartées selon une direction perpendiculaire à la direction axiale.

D'autres caractéristiques et avantages de l'invention apparaîtront au cours de la description suivante de deux de ses modes de réalisation, donné à titre d'exemples non limitatifs, en regard des dessins joints.

Sur les dessins :
- la figure 1 représente une vue en coupe longitudinale d'un premier mode de réalisation du dispositif selon l'invention ;
- la figure 2 est une vue en perspective, avec coupe selon deux plans perpendiculaires, du dispositif représenté sur la figure 1 ;

- la figure 3 représente une vue en élévation latérale du dispositif des figures 1 et 2, sans l'armature externe ;
- la figure 4 représente une vue analogue à celle de la figure 3 dans laquelle le dispositif a subi une rotation de 180 degrés autour de l'axe longitudinal Z ;
- la figure 5 représente une vue en perspective de l'armature à fenêtre du dispositif représenté aux figures 1 à 4 ;
- la figure 6 représente une vue similaire à celle de la figure 2 d'un dispositif selon un second mode de réalisation ;
- la figure 7 représente une vue en perspective de l'armature à fenêtre selon le second mode de réalisation du dispositif ;
- la figure 8 représente une vue en perspective d'une variante de réalisation de l'armature à fenêtre du dispositif selon le second mode de réalisation ;
- la figure 9 représente une vue de la face interne d'une coquille du moule du dispositif selon le premier mode de réalisation ;
- la figure 10 représente une vue de la face interne d'une coquille du moule du dispositif selon le second mode de réalisation.

Sur les différentes figures, les mêmes références désignent des éléments identiques ou similaires.

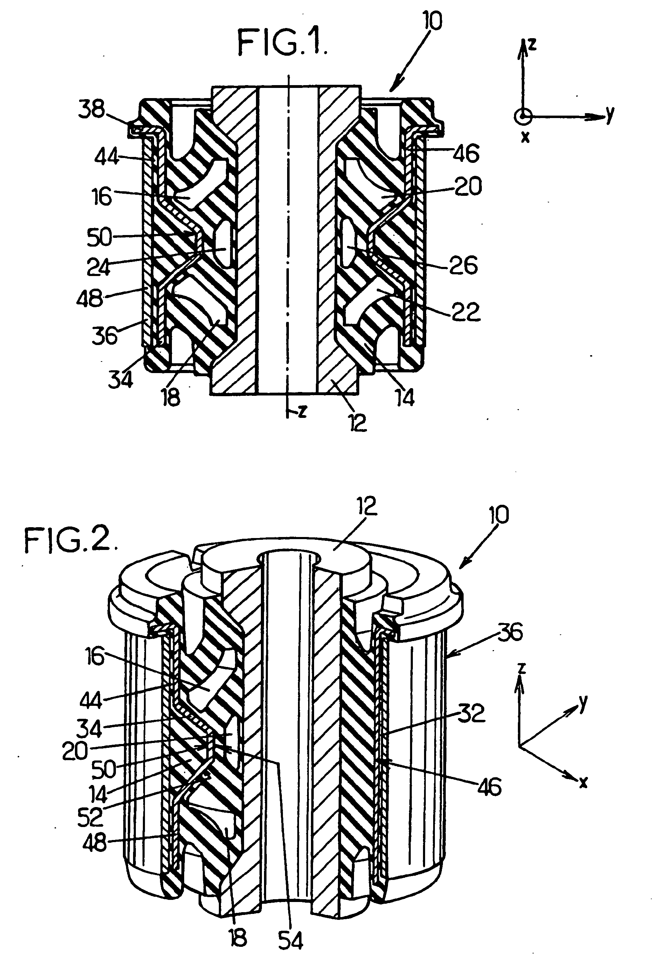

Un exemple d'un premier mode de réalisation est décrit ci-dessous en relation avec les figures 1 à 5.

Dans la description qui va suivre, on adoptera deux orientations transversales et une orientation longitudinale, selon les orientations indiquées respectivement par le trièdre X, Y, Z direct.

La figure 1 est une vue en coupe d'un exemple de mode de réalisation du dispositif antivibratoire 10 selon l'invention, ce dispositif comprenant une armature interne 12 et une armature externe 36 cylindriques. Les armatures interne 12 et externe 36 sont coaxiales selon un axe longitudinal Z. Les armatures interne 12 et externe 36 sont réalisées d'une manière connue en soi, en aluminium par exemple.

Une armature à fenêtre 34 est intercalée entre l'armature interne 12 et l'armature externe 36.

Un corps en élastomère 14 est adhérisé sur l'armature interne 12 et sur l'armature à fenêtre 34.

L'armature à fenêtre 34 est cylindrique et centrée sur l'axe Z. Elle possède une longueur légèrement supérieure à celle de l'armature externe 36 et une extrémité recourbée 38. Ainsi, l'armature externe 36 est emmanchée, rétreinte et bloquée sur l'armature à fenêtre 34, avec une couche d'élastomère 44 intercalée entre les deux. L'extrémité recourbée 38 bloque le déplacement vers le bas de l'armature à fenêtre 34 sur l'armature externe 36, et permet d'obtenir l'étanchéité du dispositif.

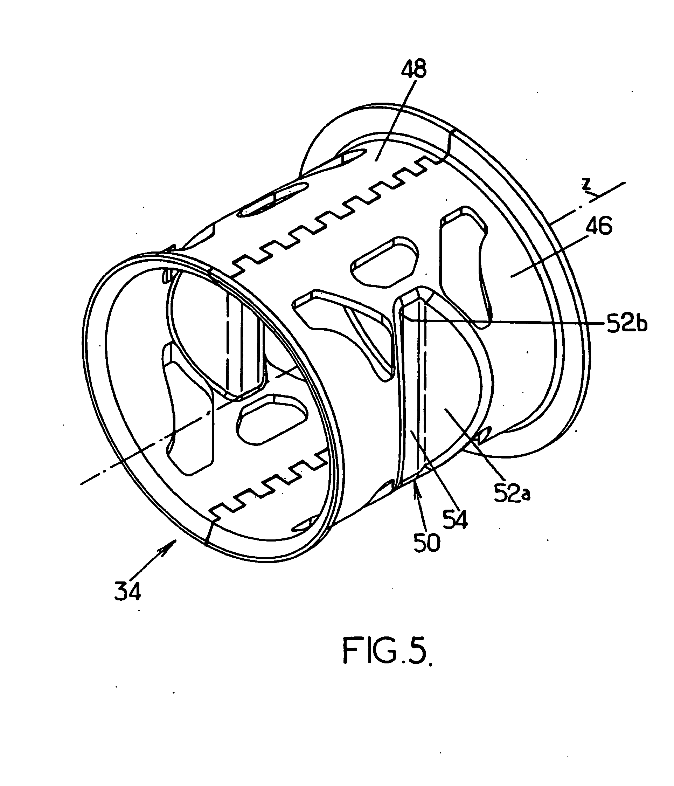

Comme représenté sur la figure 5, l'armature à fenêtre 34 présente deux éléments de flasque métalliques 46, 48 correspondant à des portions d'une surface cylindrique sensiblement parallèle à l'armature externe 36 et comportant un renfoncement 50.

Ces deux éléments de flasques 46, 48 constituent à eux seuls l'armature à fenêtre 34. Ils sont formés par emboutissage puis assemblés par agrafage, c'est à dire par emboîtement puis par compression, le long d'une direction parallèle à l'axe longitudinal Z.

Selon une variante de réalisation de l'armature à fenêtre 34, celle-ci peut être constituée d'une seule pièce emboutie, puis recourbée pour que deux extrémités longitudinales soient rapprochées et maintenues par agrafage.

Selon une autre variante, l'armature à fenêtre peut être composée de quatre éléments de flasques, correspondant à des portions d'une surface cylindrique, assemblés les uns aux autres par agrafage selon une direction parallèle à l'axe longitudinal Z.

Le premier élément de flasque 46 est symétrique de l'autre par rapport à l'axe longitudinal Z. Chacun des éléments de flasque 46 ou 48 comporte un renfoncement 50 qui présente en coupe radiale une forme en "U" avec trois surfaces d'appui. Deux de ces surfaces d'appui 52a, 52b correspondent aux deux branches du "U" et sont inclinées selon un angle aigu par rapport à l'axe Z. La troisième 54 de ces surfaces d'appui, correspondant au fond du "U", est sensiblement parallèle à l'axe Z.

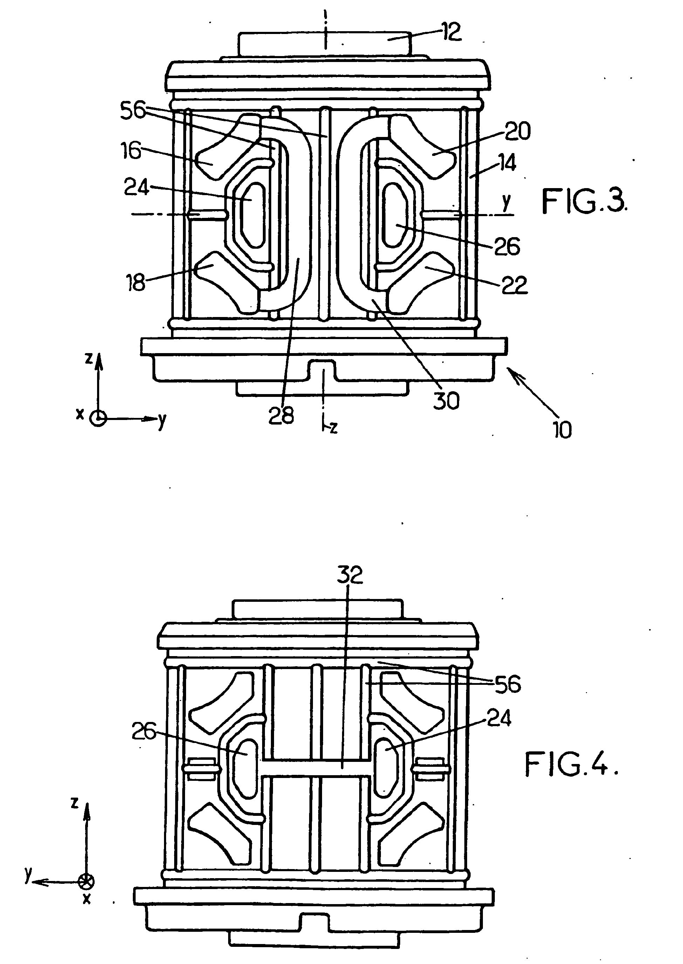

Comme représenté sur la figure 3, des chambres 16, 18, 20, 22, 24, 26 sont formées dans le corps en élastomère 14. Les chambres 16, 18, 20, 22, 24, 26 sont fermées lorsque le dispositif 10 est assemblé avec l'armature externe 36.

Le corps en élastomère 14 comporte donc six ouvertures correspondant aux chambres 16, 18, 20, 22, 24, 26. Ces ouvertures sont traversantes et sensiblement rectilignes selon une direction parallèle à l'axe X. Elles débouchent sur une surface du corps en élastomère 14 sensiblement cylindrique d'axe longitudinal Z.

Les chambres 16 et 18 ou 20 et 22, des premier et troisième jeux dits jeux axiaux, sont situées sensiblement au voisinage des extrémités longitudinales du dispositif 10. Un deuxième jeu de chambres 24, 26, dit jeu radial, est placé dans le plan médian au dispositif 10 et perpendiculaire à l'axe longitudinal Z.

Une chambre 16 ou 18 du premier jeu et une chambre 20 ou 22 du troisième jeu, situées vers la même extrémité longitudinale s'étendent dans un plan distal parallèle au plan médian. Les deux plans distaux sont symétriques par rapport au plan médian.

Les chambres 16, 18, 20, 22 des jeux axiaux présentent une section perpendiculaire à l'axe X sensiblement polygonale avec un côté à proximité d'une surface d'appui 52 et sensiblement parallèle à celle-ci (voir figures 1 et 2). Ces chambres s'étendent perpendiculairement à leurs surfaces d'appui 52 respectives, de cette surface d'appui 52 à l'armature interne 12.

Les surfaces d'appui 52 permettent de transmettre des efforts appliqués axialement selon l'axe longitudinal Z, ou même radialement selon l'axe Y, et d'augmenter la déformation de la section des chambres et donc d'augmenter les variations du volume des chambres 16 et 18 ou 20 et 22 respectivement des premier ou troisième jeux.

Les chambres 24, 26 du jeu radial présentent une section perpendiculaire à l'axe X sensiblement polygonale avec un côté sensiblement parallèle à la troisième surface d'appui 54.

La troisième surface d'appui 54 permet de transmettre des efforts appliqués radialement par rapport à la direction longitudinale Z, entre les armatures interne 12 et externe 36, à l'une des chambres 24 ou 26 du deuxième jeu.

Comme représenté sur la figure 3, les deux chambres 16 et 18 du premier jeu communiquent entre elles par l'intermédiaire d'un conduit 28 s'étendant essentiellement parallèlement à la direction longitudinale Z.

Les deux chambres 20 et 22 du troisième jeu communiquent entre elles par l'intermédiaire du conduit 30 s'étendant essentiellement parallèlement à la direction Z.

Comme représenté sur la figure 4, les deux chambres 24 et 26 du deuxième jeu communiquent entre elles par l'intermédiaire d'un conduit 32 s'étendant essentiellement de manière circulaire dans un plan médian perpendiculaire à l'axe longitudinal Z.

Les conduits 28, 30 des premier et troisième jeux de chambres et le conduit 32 du deuxième jeu de chambres sont situés au niveau d'élément de flasques opposés diamétralement.

Les conduits 28, 30, 32 sont formés dans la couche d'élastomère 44. Les conduits 28, 30, 32 comportent alors une paroi intérieure formée par une fine couche d'élastomère adhérisée sur armature à fenêtre 34, une paroi extérieure formée de l'armature externe 36 et deux bords formés dans l'épaisseur de la couche d'élastomère 44.

Ces conduits sont totalement étanches et permettent le passage du liquide d'une chambre vers l'autre. Pour renforcer leur étanchéité, des bourrelets 56 entourent chaque conduit 28, 30, 32. Ces bourrelets 56 font saillie sur la surface externe du corps en élastomère 14 lorsque l'armature externe 36 n'est pas placée sur l'armature à fenêtre 34. Lorsque le dispositif 10 est assemblé, les bourrelets 56 sont écrasés entre les armatures externe 36 et à fenêtre 34, et assurent l'étanchéité entre les différentes chambres et conduits.

Lorsque le dispositif 10 est assemblé, les chambres 16, 18, 20, 22, 24, 26 et les conduits 28, 30, 38 sont remplis d'un fluide, par exemple du glycol. Le fluide circule dans chacun de ces conduits 28, 30, 32 entre les chambres 16 et 18, 20 et 22, 24 et 26, lorsque les chambres sont déformées. Le déplacement du fluide entre les deux chambres de chaque jeu est prévu pour contribuer à amortir des vibrations émanant des différentes sollicitations auxquelles le dispositif 10 est soumis, selon la direction longitudinale Z et selon la direction radiale Y.

La présente invention fonctionne donc de la manière suivante :

L'armature interne 12 et l'armature externe 30 sont fixées sur des éléments, subissant des vibrations. Ces vibrations sont filtrées d'une part par le corps en élastomère 14 pour les hautes fréquences et amorties d'autre part par les chambres hydrauliques, pour les basses fréquences. Les oscillations relatives appliquées axialement selon l'axe longitudinal ou radialement sur l'une des armatures 12, 36, se traduisent par des mouvements alternatifs du liquide d'une chambre à l'autre, et pour une valeur prédéterminée de la fréquence des oscillations, le liquide contenu dans le conduit 28, 30, 32 assure un amortissement efficace des oscillations par effet de résonance, à basses fréquences.

En effet, le passage du fluide dans les conduits 28, 30, 32, s'effectue selon une fréquence et une amplitude maximum. Ces caractéristiques sont déterminées par les dimensions de chaque conduit 28, 30 ou 32, telles que la section et la longueur. L'amortissement des vibrations entre les armatures interne 12 et externe 36 est maximal lorsque les oscillations du liquide sont mises en résonance. De plus, la déformation des chambres est augmentée par les surfaces d'appui 52, 54 de l'armature à fenêtre 34. Ces surfaces d'appui exercent le rôle d'un piston qui exerce une pression sur l'une des chambres d'un jeu.

L'amortissement radial est indépendant de l'amortissement axial, ce qui permet d'absorber les vibrations provenant des deux directions, sans interférences, et ainsi de déterminer indépendamment les paramètres des conduits 28, 30, 32 pour obtenir un meilleur résultat.

Grâce au dispositif selon le mode de réalisation de l'invention décrit ci-dessus, on peut obtenir des courses axiales importantes, par exemple de 6 mm.

Ce type de dispositif 10 peut notamment être appliqué pour la suspension du moteur. L'armature externe est alors reliée au bras de suspension du moteur, et l'armature interne est reliée à la caisse, pour amortir les vibrations et qu'elles ne soient pas transmises à l'habitacle.

L'invention concerne aussi un procédé de réalisation d'un dispositif tel que décrit ci-dessus.

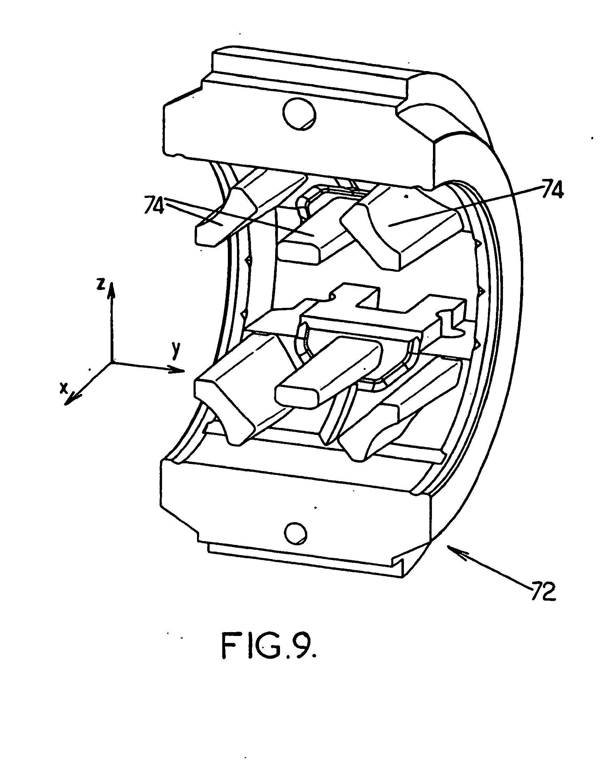

Dans un exemple de mode de mise en oeuvre du procédé selon l'invention :
- on positionne l'armature interne, recouverte d'un adhésif, et l'armature à fenêtre, dans un moule en deux parties, formée chacune par exemple par une coquille semi-cylindrique 72 représentée à la figure 9.
- on injecte le corps en élastomère dans le moule ;
- les deux parties du moule sont écartées après durcissement de l'élastomère.

Le corps en élastomère subit un traitement thermique assurant son durcissement et la liaison du corps élastomère sur l'armature interne est réalisé selon un procédé connu de l'Homme du Métier.

Puis l'armature externe est emmanchée sur la pièce précédemment obtenue, celle-ci étant plongée dans un bain de liquide afin de remplir les chambres. De manière alternative, ces dernières peuvent être remplies par un procédé de remplissage sous vide connu de l'homme du métier. Enfin l'armature externe est rétreinte sur le corps en élastomère.

Chaque partie du moule comporte un nombre de doigts 74 défini en fonction du nombre de chambre à réaliser. Pour former le moule, avant injection de l'élastomère, les coquilles semi-cylindriques 72 du moule sont rapprochées, de manière à ce que les doigts 74 soient placés en vis-à-vis et les extrémités des doigts 74 soient rapprochées au maximum, voire en contact. L'empreinte des doigts 74 forme alors les chambres.

Selon un mode de réalisation particulier, le corps en élastomère est démoulé selon une direction parallèle aux doigts 74, perpendiculairement au plan (Y, Z), ce qui permet d'avoir des chambres qui débouchent sur la surface cylindrique du corps en élastomère. Cette caractéristique permet d'obtenir une déformation plus grande de l'ouverture des chambres lorsqu'elles sont sollicitées et par conséquent une poussée du fluide plus importante d'une chambre vers une autre chambre d'un même jeu.

L'invention n'est nullement limitée aux modes d'application et de réalisation décrits ci-dessus. D'autres modes de réalisation permettent d'obtenir des résultats similaires.

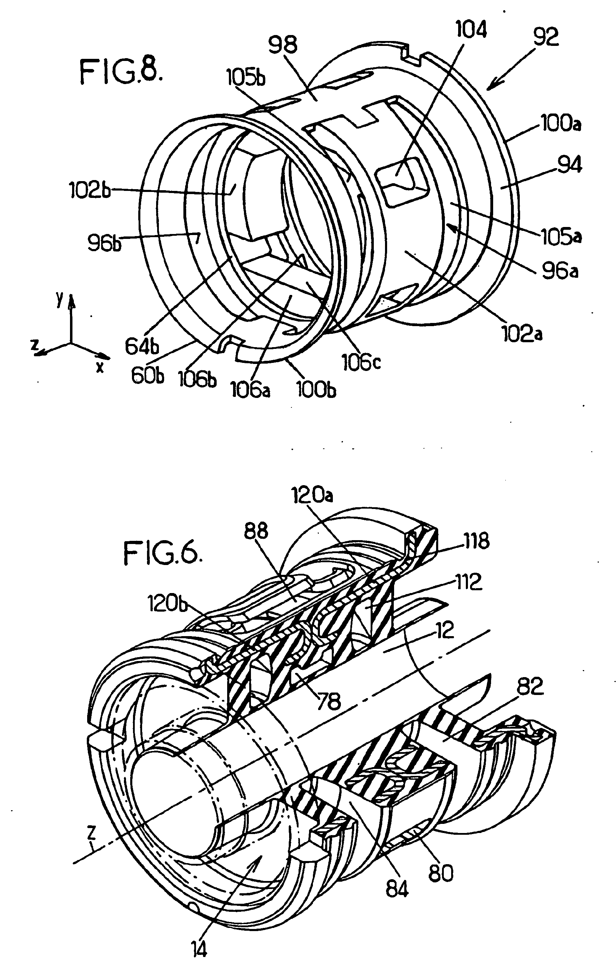

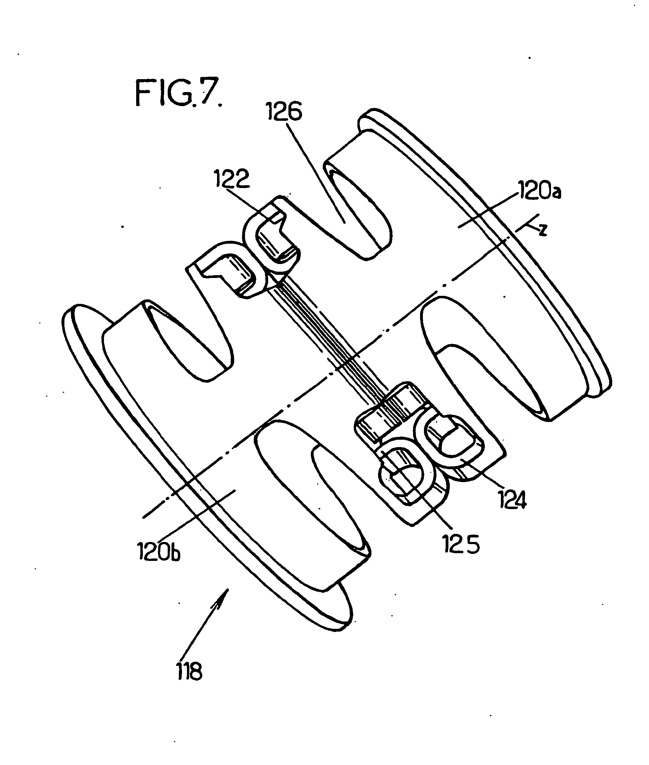

Un second mode de réalisation du dispositif est représenté aux figures 6 à 8. La figure 6 représente une vue en coupe selon deux plans perpendiculaires du dispositif antivibratoire selon le deuxième mode de réalisation. La figure 7 représente une vue en perspective de l'armature à fenêtre intégrée dans le dispositif de la figure 6. La figure 8 représente une autre armature à fenêtre pouvant être utilisée dans un dispositif du type représenté à la figure 6.

Le dispositif, représenté partiellement à la figure 6 comporte une armature interne et une armature externe, non représentées, et une armature à fenêtre 118 et un corps en élastomère 14. Plus précisément le dispositif comporte dans le corps en élastomère 14 deux jeux de deux chambres 78, 80, 82, 84, chaque chambre d'un même jeu étant reliée entre elles par au moins un conduit. Un premier jeu 78, 80 est destiné à amortir les vibrations selon la direction radiale, et sera désigné ci-après par jeu radial. L'autre jeu, dit jeu axial, est destiné à amortir les vibrations selon la direction axiale, parallèle à l'axe longitudinal Z.

Les chambres 78, 80 du jeu radial sont disposées dans un plan médian perpendiculaire à l'axe longitudinal Z. Le jeu radial est sensiblement identique à celui du premier mode de réalisation. Il comporte dés chambres orthoradiales qui débouchent sur la surface cylindrique du corps en élastomère 14, et qui présentent une ouverture de forme sensiblement circulaire.

Le jeu axial comporte deux chambres 82, 84 traversantes parallèles et disposées vers les extrémités longitudinales du dispositif et qui s'étendent dans deux plans distaux parallèles au plan médian. Ces chambres sont reliées par deux conduits dont un seul 88 est représenté sur la figure 6. Alternativement, elles peuvent être reliées par un seul conduit.

Les chambres 82, 84 débouchent sur la surface cylindrique du corps en élastomère 14 par une ouverture partiellement circulaire, c'est à dire ayant la forme d'un arc de cercle, autour de l'axe longitudinal Z du corps en élastomère 14. L'ouverture présente alors une surface plus importante, du fait de sa forme en arc de cercle, la chambre correspondant est donc plus facilement déformable. Cela permet un amortissement plus important des vibrations, à la fréquence de résonance du conduit reliant les deux chambres 82, 84.

Comme représenté à la figure 7, l'armature à fenêtre 118 est réalisée par assemblage de deux éléments de flasques 120a, 120b identiques. Chaque éléments de flasque 120a, 120b est réalisé par emboutissage et présente une forme cylindrique creuse, dirigée longitudinalement sensiblement parallèlement à l'axe Z. Les éléments de flasques 120a, 120b sont assemblés au niveau une première extrémité longitudinale, de manière que la longueur de l'armature à fenêtre soit légèrement supérieure à celle de l'armature externe. Chaque flasque présente une deuxième extrémité longitudinale recourbée, de manière à ce que l'armature externe après assemblage soit bloquée sur l'armature à fenêtre. De plus les éléments de flasques présentent des découpes 122 et des bords rétreints 124.

Les découpes 122 délimitent les sections des chambres 78, 80 du jeu radial. Les rétreints 124 permettent d'obtenir des faces disposées en regard l'une de l'autre, et par lesquelles les éléments de flasques 120a, 120b sont assemblés par soudage. De plus les bords rétreints 124 présentent une forme en U, dont au moins une des branches 125 est dirigée parallèlement à l'axe longitudinal Z pour former des zones d'appui pouvant exercer une pression sur les parois déformables en élastomère des chambres du jeu axial et radial, afin d'augmenter l'amplitude du flux du fluide d'une chambre à l'autre. Les parois en élastomère des chambres 78, 80, 82, 84 adjacentes aux zones d'appui peuvent être réalisées selon une direction parallèle à celle de la surface des zones d'appui pour gagner en efficacité sur l'amortissement axial et radial.

De plus chaque éléments de flasque 120a, 120b comporte des évidements, ou fenêtres, 126 partiellement circulaires, qui sont réalisés dans un plan médian perpendiculaire à l'axe longitudinal Z et correspondent aux ouvertures des chambres 82, 84 du jeu axial.

Chaque chambre d'un même jeu est relié par au moins un conduit tel que décrit dans le premier mode de réalisation. Les chambres 82, 84 du jeu axial, disposées vers les extrémités longitudinales du dispositif, sont reliées par au moins un conduit 88, qui s'étend longitudinalement entre les deux chambres 82, 84. Selon une variante de l'invention les chambres 82, 84 peuvent communiquer entre elles par l'intermédiaire de deux conduits disposées adjacents et séparés par un bourrelet en élastomère. Ces deux conduits permettent d'assurer le passage du fluide d'une chambre à l'autre.

Les conduits reliant les chambres 78, 80, 82, 84 sont délimités en partie par l'armature externe 36, par des parois en élastomère 14 formées lors du moulage du dispositif et par les éléments de flasque 120a, 120b éventuellement recouverts d'une couche d'élastomère. Les conduits sont disposés parallèlement à l'axe longitudinal Z ou dans un plan perpendiculaire à l'axe longitudinal afin d'amortir les vibrations respectivement selon une direction axiale ou radiale.

Le dispositif selon le second mode de réalisation fonctionne sensiblement de la même manière que le dispositif selon le premier mode de réalisation.

Lorsque les armatures internes 12 et externes 36 sont soumises à des sollicitations, les chambres 78, 80, 82, 84 des premier et deuxième jeux se déforment, ce qui entraîne le déplacement du fluide d'une chambre à l'autre, par l'intermédiaire des conduits 88.

Dans le deuxième mode de réalisation, la section des chambres 82, 84 du jeu axial étant plus importante, la déformation de la section et du volume des chambres 82, 84 est donc aussi plus importante. Ce qui augmente la force de poussée du fluide d'une première chambre à l'autre, par compression du fluide dans une première chambre. A la fréquence de résonance du conduit, l'amortissement est alors plus important que dans le premier mode de réalisation.

De plus le dispositif selon le second mode de réalisation présente dans chaque chambre 82, 84 du jeu axial, un passage 112 transversal délimité par l'armature interne 12 et l'armature à fenêtres 118, et ouvert sur chacune des chambres 82,84. Ce passage joue le rôle d'un conduit interne à travers lequel passe le fluide. Le dispositif présente donc une capacité d'amortissement à une fréquence, différente de la fréquence de résonance des conduits, déjà décrits, reliant les chambres 82, 84, qui correspond à la fréquence de résonance de l'écoulement du fluide dans le passage 112.

Le dispositif décrit dans le paragraphe précédent est réalisé de la manière suivante. Les flasques 120a, 120b de l'armature à fenêtre sont réalisés par emboutissage puis fixés par soudage sur les rétreints 124. Puis l'armature interne 12 et l'armature externe 36 sont disposées dans un moule avant l'injection de l'élastomère.

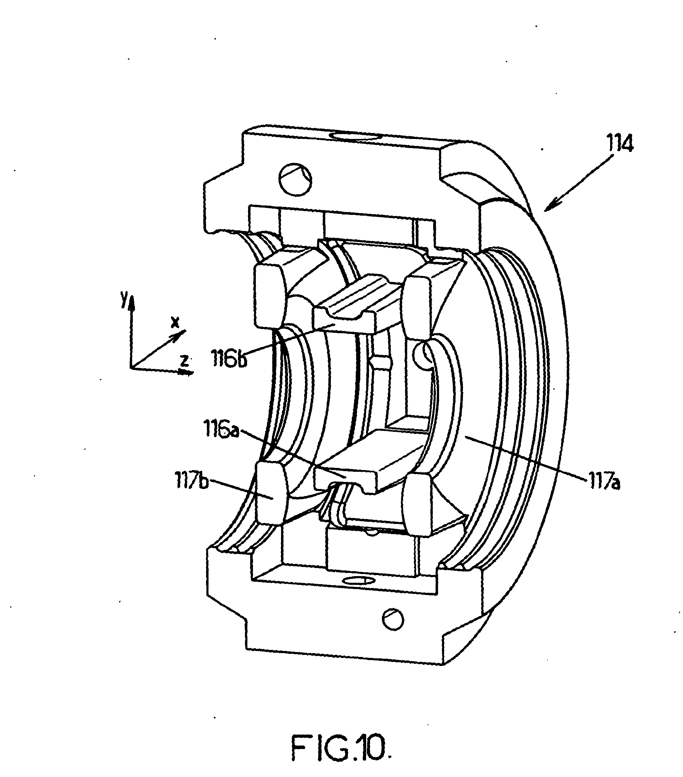

Le moule comporte deux coquilles semi-cylindriques 114 qui comprennent deux doigts 116a, 116b tels que représentés à la figure 10 et en outre deux doigts en forme de demi-anneau 117a, 117b afin de former les chambres 82, 84 du jeu axial.

Après injection de l'élastomère, les demi-coquilles 114 sont retirées parallèlement à la direction transversale X. Des angles de dépouille sont prévus pour un retrait facile. Par la suite, deux membranes internes résultant de l'élastomère écoulé entre deux doigts 116 en regard lors du moulage, sont situées dans chaque chambre 82, 84 du deuxième jeu. Ces membranes peuvent diviser les chambres 82, 84 en deux parties, mais présentent alors une capacité de déformation suffisamment importante pour permettre l'écoulement du fluide dans les conduits. Lorsque les membranes sont percées, le dispositif comporte une seule chambre 82, 84 traversante à chaque extrémité longitudinale du dispositif. Cette membrane de faible épaisseur peut aussi se percer seule après quelques tests physiques du dispositif. La membrane percée forme alors les passages 112 internes cités ci-dessus. De même, entre les deux doigts 116a, 116b du moule du dispositif selon le premier mode de réalisation, deux membranes peuvent être crées pendant l'étape de moulage puis percées ultérieurement.

Selon une variante du deuxième mode de réalisation, représentée à la figure 8, l'armature à fenêtre 92 du dispositif selon le second mode de réalisation présente une ossature métallique 94 formée d'un cylindre creux d'axe central parallèle à l'axe longitudinal Z. L'ossature métallique présente deux évidements 96a, 96b sur sa surface cylindrique, délimités par deux bras longitudinaux 98.

Deux éléments de flasques en matière plastique 102a, 102b présentant la forme d'un arc de cercle sont rapportés sur les bras 98. Tel que représentés, ces éléments de flasque 102a, 102b sont diamétralement opposés, et forment, lorsqu'ils sont disposés sur les bras longitudinaux 98 de l'armature à fenêtre 92, un cercle de diamètre sensiblement inférieur au diamètre externe des extrémités circulaires 100a, 100b. Chaque élément 102a, 102b présentent des fenêtres 104, qui constituent chacune une ouverture des chambres du jeu radial à travers l'armature à fenêtre 92.

L'assemblage des flasques 102a, 102b en matière plastique forme avec l'ossature métallique 94 des ouvertures de chambre 105a, 105b, correspondant aux chambres du jeu axial.

A partir de ce qui est décrit ci-dessus, il est possible de choisir les formes des éléments de flasques 102a, 102b en matière plastique et de les positionner en fonction des formes voulues, plus ou moins complexes, de l'armature à fenêtre 92. En effet, les éléments de flasques 102a, 102b en matière plastique peuvent présenter une ou plusieurs fenêtre 104.

Les éléments de flasques en matière plastique 102a, 102b comportent en outre des zones d'appui 106a, 106b, 106c, formées par des parties en saillie, dirigées vers l'intérieur de l'armature à fenêtre 92, et adjacentes aux chambres 78, 80, 82, 84, de manière à exercer une pression sur les chambres pour modifier l'écoulement du fluide dans celles-ci. Les surfaces 106a, 106b des zones d'appui adjacentes aux chambres 82, 84 du jeu axial sont perpendiculaires à l'axe longitudinal Z, et les surfaces 106c des zones d'appui adjacentes aux chambres 78, 80 du jeu radial sont perpendiculaires à l'axe transversal Y.

Les éléments de flasques en matière plastique 102 sont montés sur l'ossature métallique 94 par encliquetage, ce qui permet d'obtenir une armature à fenêtre 92 modulable, et de pouvoir changer aisément les éléments de flasque 102a, 102b.

L'armature à fenêtre 92 obtenue présente donc les mêmes fenêtres que celle décrite précédemment, et est appliquée pour des dispositifs anti-vibratoire tels que décrits dans le second mode de réalisation.

Il est à noter que lors du moulage les formes des sections des chambres 82, 84 peuvent varier en fonction de la forme des empreintes des doigts 116.

Dans une variante de réalisation pouvant s'appliquer aux deux modes de réalisation, le dispositif comporte sur les parties inférieure et supérieure du corps en élastomère une rondelle rigide (représentée en pointillé sur la figure 6), fixée par emboîtement sur l'armature interne. Cette rondelle est réalisée en métal, et permet d'augmenter la pression exercée sur les chambres du jeu axial, et donc d'augmenter leur déformation, pour un amortissement plus efficace.

Selon une autre variante de l'invention, l'armature à fenêtre peut être réalisée entièrement en matière plastique rigide, par moulage. Ce qui permet d'obtenir une diversité de formes, et un coût de fabrication moins élevé qu'avec une armature métallique.

## Revendications

1. Dispositif antivibratoire hydraulique comprenant une armature interne (12) et une armature externe (36) co-axiales selon un axe longitudinal Z, un corps en élastomère (14), disposé entre les armatures interne (12) et externe (36) et reliant ces dernières, ce corps (14) étant solidarisé à l'armature interne (12) et coopérant avec l'armature externe (36) pour former un ensemble étanche, le corps en élastomère (14) comportant au moins deux jeux de deux chambres (16,18;20,22;24,26) hydrauliques, les chambres d'un même jeu communiquant entre elles par l'intermédiaire d'un conduit (28,30,32) dans lequel circule un fluide, au moins un des jeux étant prévu pour l'amortissement de vibrations selon la direction choisie parmi une direction radiale et une direction axiale, dans lequel :
- une armature à fenêtre (34), est disposée à l'intérieur du corps en élastomère (14) et comporte au moins un élément de flasque (46) à proximité de l'armature externe (36), et **caractérise en ce que**:
- chaque conduit (28,30,32) relie deux chambres (16,18;20,22;24,26) d'un même jeu sur au moins une portion située entre un élément de flasque (46) de l'armature à fenêtre (34) et l'armature externe (36) et comporte, sur la portion située entre l'élément de flasque (46) de l'armature à fenêtre (34) et l'armature externe (36), des parois formées par le corps en élastomère (14), et
- les chambres (16,18,20,22,24,26) sont rectilignes et traversent le corps en élastomère selon une direction parallèle à un axe transversal X perpendiculaire à l'axe longitudinal Z.

2. Dispositif selon la revendication précédente, **caractérisé en ce que** l'armature à fenêtre (34) présente des fenêtres délimitant une section des chambres.

3. Dispositif selon l'une des revendications précédentes comportant :
- au moins un premier jeu de deux chambres (16,18;20,22), reliées entre elles par un premier conduit (28;30) s'étendant essentiellement parallèlement à l'axe longitudinal Z, pour l'amortissement de vibrations selon la direction axiale,
- au moins un deuxième jeu de deux chambres (24,26), reliées entre elles par un deuxième conduit (32) s'étendant essentiellement dans un plan perpendiculaire à l'axe longitudinal Z, pour l'amortissement de vibrations selon une direction radiale, et
- deux éléments de flasques distincts (46,48), les premier (28,30) et deuxième (32) conduits passant chacun entre un élément de flasque distinct et l'armature externe (36).

4. Dispositif selon la revendication 3, **caractérisé en ce que** les premier (28;30) et deuxième (32) conduits sont diamétralement opposé de l'autre.

5. Dispositif selon l'une des revendications précédentes, dans lequel des bourrelets (56) en élastomère longent au moins une partie de chaque conduit, pour renforcer les propriétés d'étanchéité des conduits.

6. Dispositif selon l'une des revendications précédentes, **caractérisé en ce que** chaque chambre d'un premier jeu (16,18;20,22) s'étend longitudinalement parallèlement à un plan médian et perpendiculaire à l'axe longitudinal Z, et est symétrique de l'autre chambre par rapport à ce plan médian et chaque chambre d'un deuxième jeu (24,26) s'étend longitudinalement essentiellement dans le plan sensiblement médian, et est symétrique de l'autre par rapport à l'axe Z.

7. Dispositif selon l'une des revendications précédentes, **caractérisé en ce qu'**il comporte deux jeux de chambres (16,18;20,22) prévus pour l'amortissement selon une direction axiale, ces deux jeux étant diamétralement opposés et disposés au voisinage des extrémités longitudinales du dispositif, le conduit (28,30) reliant les deux chambres (16,18;20,22) de chaque jeu s'étendant essentiellement selon l'axe longitudinal.

8. Dispositif selon l'une des revendications précédentes, **caractérisé en ce que** l'armature à fenêtre (34) comporte au moins deux flasques semi cylindriques métalliques et assemblés par agrafage.

9. Dispositif selon l'une des revendications 1 à 7, **caractérisé en ce que** l'armature à fenêtre (34) comporte une ossature métallique (60) sur laquelle sont rapportés des éléments de flasque en matière plastique (64a, 64b).

10. Dispositif selon l'une des revendications 1 7, **caractérisé en ce que** l'armature à fenêtre comporte deux flasques métalliques cylindriques assemblés par soudage.

11. Dispositif selon l'une des revendications précédentes, **caractérisé en ce que** l'armature à fenêtre (34) présente au moins une zone d'appui (68) en forme de U, dont les branches sont adjacentes aux chambres.

12. Dispositif selon les revendications 9 et 11, **caractérisé en ce que** la zone d'appui (68) est formée par une partie des éléments de flasque en matière plastique en saillie et dirigés vers l'intérieur.

13. Dispositif selon l'une quelconque des revendications 1 à 7, **caractérisé en ce que** l'armature est constituée entièrement en matière plastique.

14. Procédé de fabrication d'un dispositif selon les revendications précédentes 1 à 8, **caractérisé par le fait que** l'on place une armature à fenêtre (34) dans un moule, avec l'armature interne (12), et que le moule est formé d'au moins deux parties (70), l'une au moins de ces parties comportant au moins un doigt (74), et le moule étant adapté pour former, lorsqu'il est fermé, au moins
deux empreintes de chambre (16,18,20,22,24,26) et au moins un conduit (28,30,32) reliant les deux chambres, ce conduit ayant au moins une portion située entre l'armature à fenêtre (34) et l'armature externe (36).

15. Procédé de fabrication du dispositif selon la revendication 14, **caractérisé en ce qu'**il comporte une opération de démoulage au cours de laquelle les deux parties du moule sont écartées selon une direction perpendiculaire à la direction axiale.

## Claims

1. A hydraulic antivibration device comprising an inner strength member (12) and an outer strength member (36) that are coaxial about a longitudinal axis Z, an elastomer body (14) disposed between the inner and outer strength members (12 and 36) and interconnecting them, said body (14) being secured to the inner strength member (12) and co-operating with the outer strength member (36) to form a leaktight assembly, the elastomer body (14) including at least two sets of hydraulic chambers (16 & 18; 20 & 22; 24 & 26), the chambers in any one set communicating with one another via a duct (28, 30, 32) in which a fluid flows, at least one of the sets being designed to damp vibration in a direction selected from a radial direction and an axial direction, wherein:
a window strength member (34) is disposed inside the elastomer body (14) and comprises at least one plate element (46) close to the outer strength member (36); and **characterized in that**:
• each duct (28, 30, 32) interconnects two chambers (16 & 18; 20 & 22; 24 & 26) of the same set over at least a portion situated between a plate element (46) of the window strength member (34) and the outer strength member (36), and comprises walls formed by the elastomer body (14); and
• the chambers (16 & 18; 20 & 22; 24 & 26) are rectilinear and pass through the elastomer body in a direction that is parallel to a transverse axis X perpendicular to the longitudinal axis Z.

2. A device according to the preceding claim, **characterized in that** the window strength member (34) presents windows defining a section of the chambers.

3. A device according to any preceding claim, the device comprising:
• at least one first set of two chambers (16 & 18; 20 & 22) interconnected by a first duct (28; 30) extending essentially parallel to the longitudinal axis Z, for damping vibration in the axial direction;
• at least one second set of two chambers (24 & 26) interconnected by a second duct (32) extending essentially in a plane perpendicular to the longitudinal axis Z for damping vibration in a radial direction; and
• two distinct plate elements (46, 48), the first and second ducts (28, 30; 32) each passing between a distinct plate element and the outer strength member (36).

4. A device according to claim 3, **characterized in that** the first and second ducts (28, 30; 32) are diametrically opposite each other.

5. A device according to any preceding claim, in which elastomer beads (56) run along at least a portion of each duct, in order to reinforce the sealing properties of the duct.

6. A device according to any preceding claim, **characterized in that** each chamber of a first set (16 & 18; 20 & 22) extends longitudinally parallel to a midplane and perpendicularly to the longitudinal axis Z, and is symmetrical to the other chamber about said midplane, and each chamber of a second set (24 & 26) extends longitudinally essentially in the substantially midplane, and is symmetrical to the other chamber about the axis Z.

7. A device according to any preceding claim, **characterized in that** it has two sets of chambers (16 & 18; 20 & 22) for damping in an axial direction, these two sets being diametrically opposite and disposed in the vicinity of the longitudinal ends of the device, the ducts (28; 30) interconnecting the two chambers (16 & 18; 20 & 22) in each set extending essentially along the longitudinal axis.

8. A device according to any preceding claim, **characterized in that** the window strength member (34) comprises at least two semicylindrical metal plates assembled together by staking.

9. A device according to any one of claims 1 to 7, **characterized in that** the window strength member (34) includes a metal structure (60) on which plate elements (64a, 64b) made of plastics material are fitted.

10. A device according to any one of claims 1 to 7, **characterized in that** the window strength member comprises two cylindrical metal plates assembled together by welding.

11. A device according to any preceding claim, **characterized in that** the window strength member (34) presents at least one U-shaped bearing zone (68) having limbs adjacent to the chambers.

12. A device according to claims 10 and 12, **characterized in that** the bearing zone (68) is formed by projecting portions of the plastics material plate elements that are directed towards the inside.

13. A device according to any one of claims 1 to 8, **characterized in that** the strength member is made entirely out of plastics material.

14. A method of manufacturing a device according to preceding claims 1 to 8, **characterized by** the fact that a window strength member (34) is placed in a mold together with the inner strength member (12), and that the mold is made up of at least two parts (70), at least one of the parts including at least one finger (74), and, on being closed, the mold is adapted to form at least two chamber-forming recesses (16, 18, 20, 22, 24, 26) and at least one duct (28, 30, 32) interconnecting the two chambers, said duct having at least one portion situated between the window strength member (34) and the outer strength member (36).

15. A method of manufacture according to claim 14, **characterized in that** it includes an unmolding operation during which the two mold parts are moved apart along a direction perpendicular to the axial direction.

## Patentansprüche

1. Hydraulische Antivibrationsvorrichtung, die eine innere Armierung (12) und eine äußere Armierung (36) einschließt, die entlang einer Längsachse Z koaxial angeordnet sind, einen zwischen der inneren Armierung (12) und der äußeren Armierung (36) angeordneten und diese miteinander verbindenden Elastomer-Körper (14), der mit der inneren Armierung (12) verbunden ist und mit der äußeren Armierung (36) zusammenwirkt, um einen dichten Aufbau zu bilden, wobei der Elastomer-Körper (14) wenigstens zwei Gruppen von zwei hydraulischen Kammern (16, 18; 20, 22; 24, 26) umfasst, wobei die Kammern ein und der selben Gruppe mittels einer Leitung (28, 30, 32), in welcher ein Fluid strömt, miteinander in Verbindung stehen, wobei wenigstens eine der Gruppen zum Dämpfen von in der Radialrichtung und/oder in der Axialrichtung verlaufenden Vibrationen vorgesehen ist, wobei:
- eine mit Fenster versehene Armierung (34) im Innern des Elastomer-Körpers (14) angeordnet ist und in Nachbarschaft der äußeren Armierung (36) wenigstens ein Flanschelement (46) umfasst, und **dadurch gekennzeichnet, dass**:
- jede Leitung (28, 30, 32) auf wenigstens einem sich zwischen einem Flanschelement (46) der mit Fenster versehenen Armierung (34) und der äußeren Armierung (36) befindenden Abschnitt zwei Kammern (16, 18; 20, 22; 24, 26) ein und derselben Gruppe miteinander verbindet und auf dem sich zwischen dem Flanschelement (46) der mit Fenster versehenen Armierung (34) und der äußeren Armierung (36) befindenden Abschnitt mittels des Elastomer-Körpers (14) gebildete Wände umfasst, und
- die Kammern (16, 18; 20, 22; 24, 26) geradlinig sind und den Elastomer-Körper entlang einer zu einer Querachse X, die zur Längsachse Z orthogonal verläuft, parallel verlaufenden Richtung quert.

2. Vorrichtung gemäß dem vorstehenden Anspruch, **dadurch gekennzeichnet, dass** die mit Fenster versehene Armierung (34) Fenster aufweist, die einen Abschnitt der Kammern begrenzen.

3. Vorrichtung gemäß einem der vorstehenden Ansprüche, umfassend:
- wenigstens eine erste Gruppe von zwei Kammern (16, 18; 20, 22), die mittels einer ersten Leitung (28; 30), die sich bezüglich der Längsachse Z im Wesentlichen parallel erstreckt, miteinander verbunden sind, um Vibrationen entlang der Axialrichtung zu dämpfen,
- wenigstens eine zweite Gruppe von zwei Kammern (24, 26), die mittels einer zweiten Leitung (32), die sich im Wesentlichen in einer bezüglich der Längsachse Z orthogonal verlaufenden Ebene erstreckt, miteinander verbunden sind, um Vibrationen entlang einer Radialrichtung zu dämpfen,
- zwei gesonderte Flanschelemente (46, 48), wobei die erste Leitung (28, 30) und die zweite Leitung (32) jeweils jede zwischen einem gesonderten Flanschelement und der äußeren Armierung (36) hindurchtritt.

4. Vorrichtung gemäß Anspruch 3, **dadurch gekennzeichnet, dass** die erste Leitung (28; 30) und die zweite Leitung (32) einander diametral gegenüberliegen.

5. Vorrichtung gemäß einem der vorstehenden Ansprüche, bei welchem Wülste (56) aus Elastomer wenigstens einem Teil jeder Leitung entlangführen, um die Dichtungseigenschaften der Leitungen zu verstärken.

6. Vorrichtung gemäß einem der vorstehenden Ansprüche, **dadurch gekennzeichnet, dass** sich jede Kammer (16, 18; 20, 22) einer ersten Gruppe bezüglich einer mittleren Ebene in Längsrichtung parallel und bezüglich der Längsachse Z orthogonal erstreckt und in Bezug auf diese mittlere Ebene zu der anderen Kammer symmetrisch ist und dass sich jede Kammer (24, 26) einer zweiten Gruppe im Wesentlichen in der im Wesentlichen mittleren Ebene in Längsrichtung erstreckt und in Bezug auf die Achse Z zu der anderen symmetrisch ist.

7. Vorrichtung gemäß einem der vorstehenden Ansprüche, **dadurch gekennzeichnet, dass** sie zwei Gruppen von Kammern (16, 18; 20, 22) umfasst, die zum Dämpfen entlang einer Axialrichtung vorgesehen sind, wobei diese beiden Gruppen einander diametral gegenüberliegen und in Nachbarschaft von Längsenden der Vorrichtung angeordnet sind, wobei die Leitung (28, 30) die beiden sich im Wesentlichen entlang der Längsachse Z erstreckenden Kammern (16, 18; 20, 22) jeder Gruppe miteinander verbinden.

8. Vorrichtung gemäß einem der vorstehenden Ansprüche, **dadurch gekennzeichnet, dass** die mit Fenster versehene Armierung (34) wenigstens zwei metallische Flansche umfasst, die halbzylindrisch ausgebildet und mittels Klammern zusammengefügt sind.

9. Vorrichtung gemäß einem der Ansprüche 1 bis 7, **dadurch gekennzeichnet, dass** die mit Fenster versehene Armierung (34) ein Metallgerippe (60) umfasst, auf welchem Flanschelemente (64a, 64b) aus Kunststoff angeordnet sind.

10. Vorrichtung gemäß einem der Ansprüche 1 bis 7, **dadurch gekennzeichnet, dass** die mit Fenster versehene Armierung zwei zylindrische Metallflansche umfasst, die mittels Schweißung zusammengefügt sind.

11. Vorrichtung gemäß einem der vorstehenden Ansprüche, **dadurch gekennzeichnet, dass** die mit Fenster versehene Armierung (34) wenigstens einen U-förmigen Anlagebereich (68) aufweist, dessen Schenkel sich in Nachbarschaft der Kammern befinden.

12. Vorrichtung gemäß den Ansprüchen 9 und 11, **dadurch gekennzeichnet, dass** der Anlagebereich (68) mittels eines vorspringenden und nach innen gerichteten Teils der Flanschelemente aus Kunststoff gebildet ist.

13. Vorrichtung gemäß einem der Ansprüche 1 bis 7, **dadurch gekennzeichnet, dass** die Armierung vollständig aus Kunststoff gebildet ist.

14. Verfahren zum Herstellen einer Vorrichtung gemäß einem der vorstehenden Ansprüche 1 bis 8, **dadurch gekennzeichnet, dass** eine mit Fenster versehene Armierung (34) zusammen mit der inneren Armierung (12) in einer Form angeordnet wird und die Form aus wenigstens zwei Teilen (70) gebildet ist, wobei wenigstens einer dieser Teile wenigstens einen Stift (74) umfasst, und wobei die Form dazu angepasst ist, in geschlossenem Zustand wenigstens zwei Kammerabdrücke (16, 18, 20, 22, 24, 26) zu bilden, sowie wenigstens eine die beiden Kammern verbindende Leitung (28, 30, 32), wobei diese Leitung wenigstens einen sich zwischen der mit Fenster versehenen Armierung (34) und der äußeren Armierung (36) befindenden Abschnitt aufweist.

15. Verfahren zum Herstellen der Vorrichtung gemäß Anspruch 14, **dadurch gekennzeichnet, dass** es einen Vorgang des Ausformens umfasst, in dessen Verlauf die beiden Teile der Form entlang einer zur Axialrichtung orthogonal verlaufenden Richtung voneinander entfernt werden.
